# EUROPEAN PATENT SPECIFICATION

(11) **EP 3 866 085 B1**
(45) Date of publication and mention of the grant of the patent: **04.12.2024**
(21) Application number: 21156997.5
(22) Date of filing: 12.02.2021
(51) Int. Cl.: G06Q 10/087, B67D 1/08, B67D 7/84, G07G 1/00, G07F 13/06

(54) **AIRLINE CATERING TROLLEY**
SERVIERWAGEN FÜR FLUGGESELLSCHAFTEN
CHARIOT DE RESTAURATION AÉRIENNE

(30) Priority: 14.02.2020 US 202016790921
(43) Date of publication of application: 18.08.2021
(73) Proprietor: The Boeing Company, Arlington, VA 22202 (US)
(72) Inventor: STEPHENS, Gentry B., Chicago, Illinois 60606-1596 (US)
(74) Representative: Morrall, Jonathan Ian McLachlan

(56) References cited:
- WO-A2-2015/022692
- US-A1- 2009 069 930
- US-A1- 2015 325 075
- US-A1- 2019 311 318

## Description

### FIELD

This disclosure relates generally to airline catering trolleys and, more specifically, to beverage dispensing airline catering trolleys.

### BACKGROUND

Airline catering trolleys are used in aircraft to transport and serve soft drinks and other beverages during a flight and typically colntain several drawers that store multiple cans of beverages per drawer. Each standard drawer can carry approximately 20 standard cans, which adds excess weight to the aircraft and requires multiple carts to manage the inventory for a flight.

To avoid carrying unnecessary beverages, many airlines attempt to optimize the drinks they carry by having employees manually count drink cans that go on and off after each flight to analyze usage and manage inventory, which can be a time consuming process. Airlines then use the information gathered to develop algorithms and ratios that allow them to optimize drink carried for particular flight times, days of week, destinations, etc. The empty cans after each flight must also be collected, disposed of, and counted to update the drink algorithms.

Cans that are not consumed during a flight also add unnecessary weight to aircraft that increases fuel consumption. For example, it has been estimated that one unused can of soda per year on every flight flown by one aircraft can increase the fuel cost up to $150.

WO2015022692A2, in accordance with its abstract, states a beverage dispenser for dispensing a beverage that is a mixture of beverage components, the dispenser comprising: a body; a door closable on the body; one or more beverage components positioned in the body; and one or more beverage components positioned in the door.

US2019311318A1, in accordance with its abstract, states a system for stock management for on-board catering for a vehicle, in particular for an aircraft, which includes a galley which is provided with a control unit for controlling the galley, wherein the control unit is designed to make available stock management data of the galley; a service unit for transporting supplies within the vehicle, wherein the stock management data comprise a stock record of the supplies transported with the service unit; and at least one operator control element which is communicatively connected to the control unit of the galley via a wireless data connection and is designed to record removal of a supply item from the service unit and/or reception of a supply item into the service unit, and to bring about updating of the stock record of the transported supplies on the basis thereof.

US2015325075A1, in accordance with its abstract, states a system for managing beverage sales and inventory, and for enabling customers to pour their own beverages while preventing shrinkage is disclosed. The system enables a user to access a beverage from a beverage dispenser by presenting a beverage-pour tracking device. The beverage dispenser can prevent a user from accessing the beverage without the beverage-pour tracking device. Further, the system can confirm whether the user is permitted to access the beverage dispenser before enabling the user to access the dispenser.

US 2009/069930 A1, in accordance with its abstract, states systems and methods for dispensing consumable products. One embodiment of the invention can provide a product dispenser. The product dispenser can include an ingredient matrix operable to receive a plurality of product ingredients. In addition, the product dispenser can include a controller in communication with the ingredient matrix, and operable to execute a set of instructions to receive product data associated with the plurality of product ingredients. Moreover, the controller can further comprise a set of instructions to track usage of the plurality of product ingredients when at least one product is dispensed. Furthermore, the controller can further comprise a set of instructions to update the product data during or after dispensing of a product or installation of one or more product ingredients in the ingredient matrix.

### SUMMARY

According to an aspect, there is provided an airline catering trolley as defined in claim 1. Optional features of the aspect are set out in the dependent claims.

The features, functions, and advantages that have been discussed can be achieved independently in various examples or may be combined in yet other examples further details of which can be seen with reference to the following description and drawings.

### BRIEF DESCRIPTION OF DRAWINGS

FIG. 1 is a front perspective view of an example airline catering trolley;
FIG. 2 is a front view of the airline catering trolley of Fig. 1;
FIG. 3 is a side view of the airline catering trolley of Fig. 1 showing an example schematic layout of an example beverage dispensing system; and
FIG. 4 is an example schematic illustration of one of the computing devices of the airline catering trolley of Fig. 1.

### DESCRIPTION

The example airline catering trolley disclosed herein includes a beverage dispensing system with flavor cartridges for the desired beverages, which eliminates the needs to carry cans on aircraft and saves weight on each flight. Drinks are dispensed using stackable plastic cups, which eliminates aluminum can waste, allows for a more efficient cleanup, and improves the customer experience by offering a larger selection of drink flavors. The example trolley optimizes space on an aircraft for beverages, optimizes the weight of beverages being served, reduces unused beverages, automates data gathering of beverages dispensed, and optimizes flight attendant workload and time by reducing the time looking for specific beverages, serving beverages, collecting and disposing of trash and recyclables, and analyzing beverages not consumed on a flight. The trolley can dispense many different types of beverages by micro-dosing blends of one or more concentrated ingredients with water, sweetener, and other beverage components at the point where the beverage is dispensed. The flavor cartridges store concentrated ingredients and have radio frequency identification chips to detect supplies and to identify when resupplying needs to occur.

The example airline catering trolley also includes a computing device, such as an iPad or other touchscreen computing device, that is used to input beverage selections, control the beverage dispensing system to mix the concentrated flavors and other beverage components to dispense the beverage requested, and manage the inventory of the flavor cartridges and other beverage components. Since the computing device can keep track of beverages dispensed and the amount of the flavor cartridges and other beverage components used, the need to count and restock beverage cans and collect and dispose of empty cans, which saves time during and after each flight. In addition, the computing device can automatically transmit beverage use information, beverage component inventory information, and airline catering trolley and/or beverage dispensing system maintenance information to the aircraft computing system for use in determining restocking and maintenance requirements and allowing airlines to track and make adjustments to the inventory based on the information, again saving additional time.

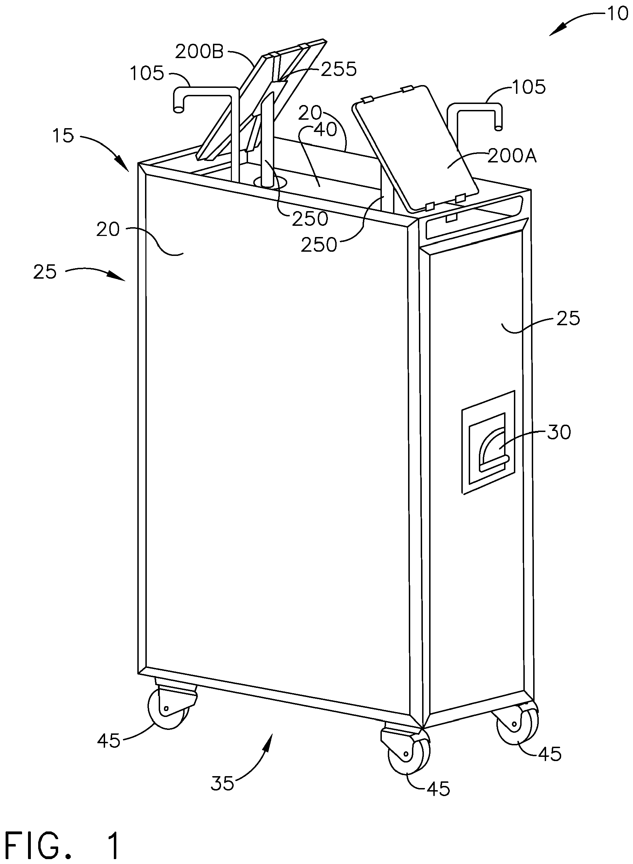

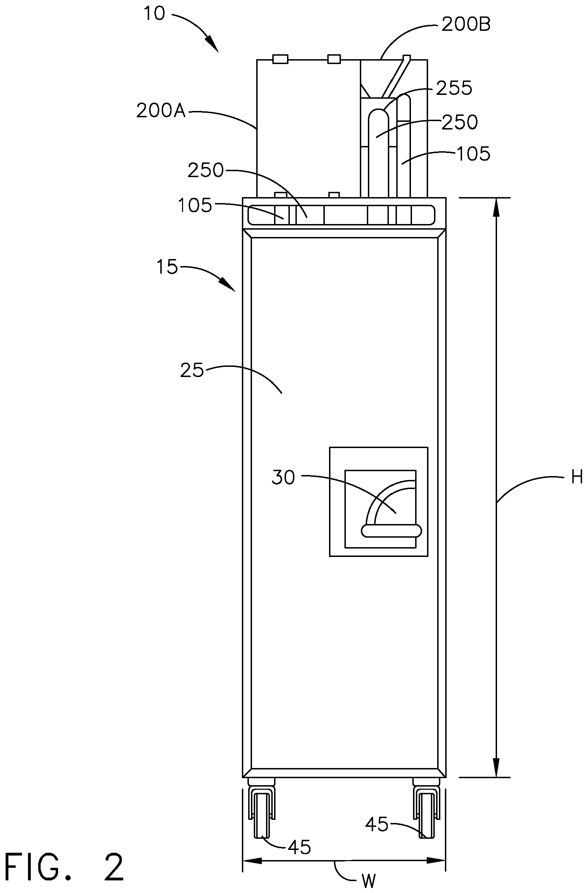

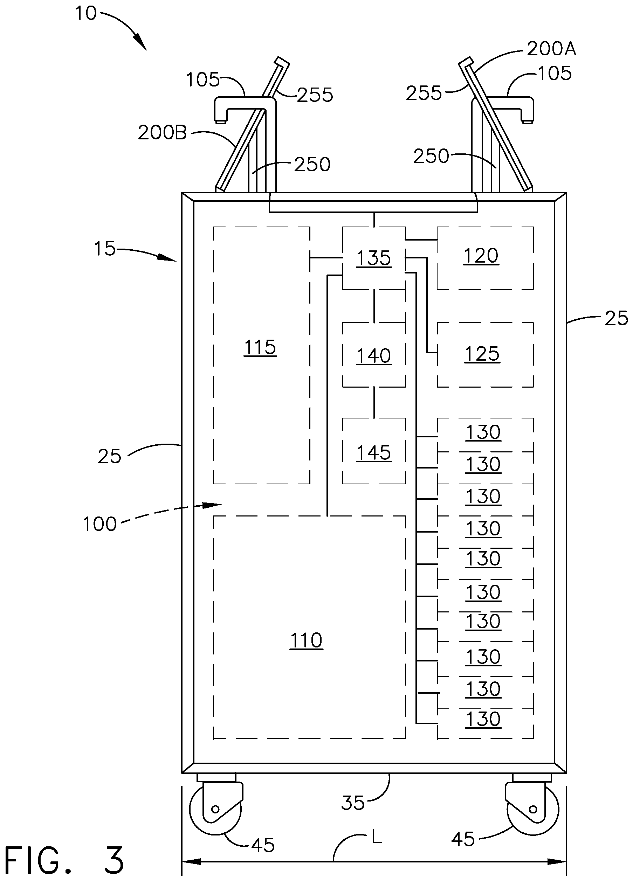

Referring to Figs. 1-3, an example airline catering trolley 10 is shown that generally includes a mobile cart body 15, a beverage dispensing system 100, and first and second computing devices 200A, 200B.

In the example shown, mobile cart body 15 is a generally rigid box having a pair of opposing side walls 20 and a pair of opposing doors 225, which each have a handle/latch mechanism 30 to allow the door 225 to be opened, closed, and secured to allow access to the inside of mobile cart body 15. Alternatively, rather than the configuration shown, side walls 20 could be doors instead of solid walls, doors 225 could be solid walls, or all four sides of mobile cart body 15 could be configured as doors, depending on the desired configuration. A bottom wall 35 and opposing top wall 40 each extend between the pair of opposing side walls 20 and the pair of opposing doors 25. As shown, mobile cart body 15 can have a width W of approximately 0.3 meters (11 % inches), a height H of approximately 1 meter (3 feet 3 3/8 inches), and a length L of 0.75 meters (2 feet 5 ½ inches). A set of casters 45 is attached to bottom wall 35 to allow mobile cart body 15 to be easily moved and maneuvered within the aircraft.

Beverage dispensing system 100 is generally disposed within mobile cart body 15 and dispenses beverages based on inputs received by first and second computing devices 200A, 200B. In the example shown, beverage dispensing system 100 is configured to dispense mainly soft drinks and includes a water reservoir 110, a carbon dioxide reservoir 115, at least one sweetener reservoir, which in the example shown includes non-nutritive sweetener reservoir 120 and high fructose corn syrup reservoir 125, a plurality of compact flavor cartridges 130, a mixer 135, and a pump 140 within mobile cart body 15 and a beverage dispenser 105 that extends through and from top wall 40 of cart body 15 to dispense the requested beverages. Beverage dispensing system 100 includes a rechargeable battery 145 to power pump 140 and possibly power or charge first and second computing devices 200A, 200B.

First and second computing devices 200A, 200B are mounted to cart body 15 and are operatively connected to beverage dispensing system 100, for example, through a wired connection or wireless connection, such as Bluetooth^{®}, Wi-Fi, cellular, etc. Although shown in Figs. 1-3 with two computing devices, airline catering trolley could also have a single computing device, or more than two computing devices, depending on the configuration desired. In the airline catering trolley of the present invention, the trolley comprises a first computing device removably mounted to the cart body. Meanwhile, returning to the example shown in Figs. 1-3, first and second computing devices 200A, 200B are removably mounted to cart body 15 through posts 250 secured to top wall 40 of cart body 15 and brackets/cradles 255 that are mounted to posts 250 and retain first and second computing devices 200A, 200B. First and second computing devices 200A, 200B can also be configured to be plugged into and/or mounted to the aircraft 300, for example to the bulkhead of aircraft 300, when removed from cart body 15. This allows first and second computing devices 200A, 200B to be assigned to and stay with a particular aircraft and to be used with multiple airline catering trolleys, which allows for the use of less expensive airline catering trolleys and saves space in the aircraft. In the airline catering trolley of the present invention, the first computing device is mountable to an aircraft when removed from the cart body.

In the example shown, first and second computing devices 200A, 200B are identical, therefore, only first computing device 200A will be described in detail herein and it will be understood that second computing devices 200B is the same as first computing device 200A.

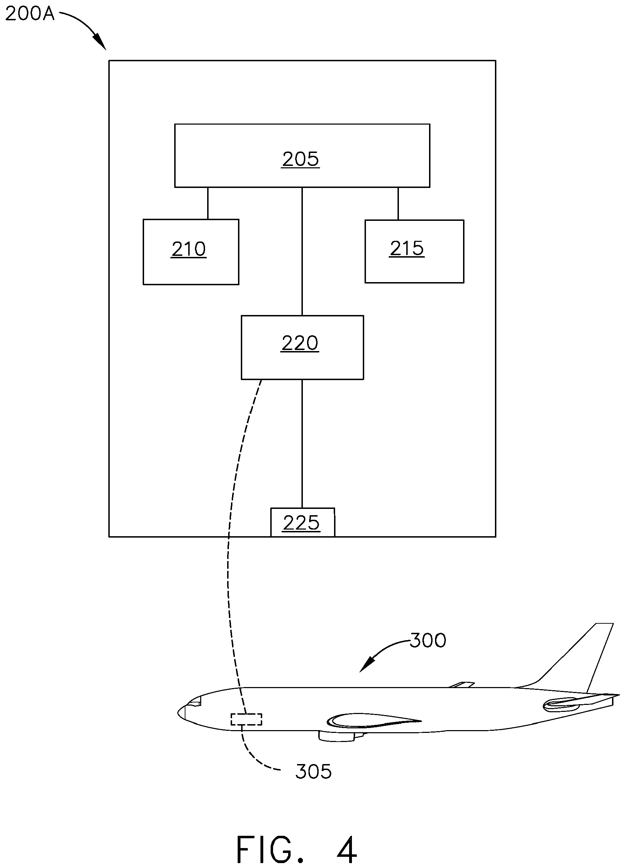

Referring to Fig. 4, first computing device 200A generally includes a processor 205, a memory 210 connected to processor 205, an input/output device 215 such as a touchscreen connected to processor 205, and a transceiver 220 connected to processor 205. Memory 210 of first computing device 200A includes computer readable instructions that, when executed by processor 205, configure first computing device 200A to receive a first input from a user regarding a first beverage to be dispensed (a beverage selection) through input/output device 215. Based on the beverage selection from the user, first computing device 200A then determine which beverage components are required for the selected beverage and communicates with beverage dispensing system 100 to dispense the selected beverage from beverage dispenser 105 based on the beverage selection.

As first computing device 200A receives beverage selections and dispenses beverages through beverage dispensing system 100, first computing device collects data analytics regarding the beverages requested and dispensed and monitors the levels of the beverage components in beverage dispensing system 100 of airline catering trolley 10. First computing device 200A can also be configured to communicate service data regarding operation of airline catering trolley 10, such as the data analytics collected regarding the beverages dispensed from beverage dispensing system 100, the levels of each of the beverage components, information regarding service and maintenance requirements of airline catering trolley 10, etc., to aircraft computing system 305 of aircraft 300 through transceiver 220. This communication with aircraft computing system 305 of aircraft 300 can be done through a wireless connection, such as a Bluetooth^{®}, Wi-Fi, or cellular connection, or through a wired connection using an appropriate connector 225 such as a USB connector, micro USB connector, lightning connector, etc., and can be initiated manually by a user, can be scheduled to occur at predetermined times or intervals, or can be scheduled to occur at specific times, such as at the end of each flight. Communication of this information to aircraft computing system 305 allows aircraft computing system 305 to communicate with a ground crew system and provide information regarding what supplies and/or maintenance may be required before the aircraft lands and/or reaches its gate so the catering and maintenance ground crews can be ready to provide the supplies and/or maintenance required.

While various examples have been described above, this disclosure is not intended to be limited thereto. Variations can be made to the disclosed examples that are still within the scope of the appended claims.

## Claims

1. An airline catering trolley (10), comprising:
a mobile cart body (15);
a beverage dispensing system (100) disposed within the cart body (15) and including a beverage dispenser (105) extending from the cart body (15); and
a first computing device (200A) mounted to the cart body (15) and operatively connected to the beverage dispensing system (100), the first computing device (200A) including a processor (205), a memory (210), an input/output device (215), and a transceiver (220);
wherein the first computing device (200A) is configured to receive a first input regarding a first beverage to be dispensed through the input/output device (215), and dispense beverages from the beverage dispenser (105) based on the first input; and
wherein the first computing device (200A) is removeably mounted to the cart body (15) and is mountable to an aircraft (300) when removed from the cart body (15).

2. The airline catering trolley (10) of claim 1, wherein the first computing device (220 A) further communicates service data regarding operation of the airline catering trolley (10) to an aircraft computing system (305) of the aircraft (300).

3. The airline catering trolley (10) according to claim 1 or claim 2, wherein the input/output device (215) is a touchscreen.

4. The airline catering trolley (10) according to any preceding claim, comprising a second computing device (200B) mounted to the cart body (15) and operatively connected to the beverage dispensing system (100), the second computing device (200B) including a processor (205), a memory (210), an input/output device (215), and a transceiver (220), and configured to receive a second input regarding a second beverage to be dispensed through the input/output device (215) of the second computing device (200B), dispense beverages from the beverage dispenser (105) based on the second input, and communicate service data regarding operation of the airline catering trolley (10) to an or the aircraft computing system (305) of the aircraft (300).

5. The airline catering trolley (10) according to preceding claim, wherein the first computing device (200A) communicates with an or the aircraft computing system (305) through a wireless connection.

6. The airline catering trolley (10) according to claim 2, wherein the service data regarding operation of the airline catering trolley (10) includes data analytics regarding beverages dispensed from the beverage dispensing system (100).

7. The airline catering trolley (10) of claim 6, wherein the service data regarding operation of the airline catering trolley (10) includes information regarding service and maintenance of the airline catering trolley (10).

8. The airline catering trolley (10) according to any preceding claim, wherein the beverage dispensing system (100) comprises a water reservoir (110), a carbon dioxide reservoir (115), a sweetener reservoir (120, 125), a plurality of compact flavor cartridges (130), a mixer (135), and a pump (140).

9. The airline catering trolley (10) of claim 8, wherein each of the compact flavor cartridges (130) has a radio frequency identification chip to detect supplies and to identify when resupplying needs to occur.

10. The airline catering trolley (10) according to any of claims 4 - 9, wherein the first and second computing devices (200A, 200B) are identical.

11. The airline catering trolley (10) according to any preceding claim, wherein the or an aircraft computing system (305) of the aircraft (300) is capable of communicating with a ground crew system.

12. The airline catering trolley (10) according to any preceding claim, wherein the beverage dispensing system (100) includes a rechargeable battery (145) to charge the first computing device (200A).

13. The airline catering trolley (10) according to any preceding claim, wherein the first computing device (200A) is removably mounted to the cart body (15) through a post (250) secured to a top wall (40) of the cart body (15) and a bracket or cradle (255) mounted to the post (250) and retaining the first computing device (200A).

14. The airline catering trolley (10) according to claim 13, wherein the first computing device (200A) is configured to be mounted to the bulkhead of the aircraft (300) when removed from the cart body (15).

15. The airline catering trolley (10) according to any preceding claim, wherein the first computing device (200A) collects data analytics regarding the beverages requested and dispensed and monitors the levels of the beverage components in the beverage dispensing system (100) of the airline catering trolley (10).

## Patentansprüche

1. Servierwagen für Fluggesellschaften (10), umfassend:
einen mobilen Wagen (15);
ein Getränkeausgabesystem (100), das innerhalb des Wagens (15) angeordnet ist und einen Getränkespender (105) enthält, der sich aus dem Wagen (15) heraus erstreckt; und
eine erste Rechenvorrichtung (200A), die an dem Wagen (15) angebracht ist und funktionsfähig mit dem Getränkeausgabesystem (100) verbunden ist, wobei die erste Rechenvorrichtung (200A) einen Prozessor (205), einen Speicher (210), eine Ein-/Ausgabevorrichtung (215) und einen Transceiver (220) enthält;
wobei die erste Rechenvorrichtung (200A) dazu ausgelegt ist, eine erste Eingabe bezüglich eines ersten auszugebenden Getränks über die Ein-/Ausgabevorrichtung (215) zu empfangen, und Getränke aus dem Getränkespender (105) basierend auf der ersten Eingabe auszugeben; und
wobei die erste Rechenvorrichtung (200A) abnehmbar an dem Wagen (15) angebracht ist und nach dem Entfernen von dem Wagen (15) an einem Flugzeug (300) anbringbar ist.

2. Servierwagen für Fluggesellschaften (10) nach Anspruch 1, wobei die erste Rechenvorrichtung (220A) ferner Leistungsdaten bezüglich des Betriebs des Servierwagens für Fluggesellschaften (10) an ein Flugzeugrechensystem (305) des Flugzeugs (300) übermittelt.

3. Servierwagen für Fluggesellschaften (10) nach Anspruch 1 oder Anspruch 2, wobei die Ein-/Ausgabevorrichtung (215) ein Touchscreen ist.

4. Servierwagen für Fluggesellschaften (10) nach einem der vorhergehenden Ansprüche, umfassend eine zweite Rechenvorrichtung (200B), die an dem Wagen (15) angebracht und funktionsfähig mit dem Getränkeausgabesystem (100) verbunden ist, wobei die zweite Rechenvorrichtung (200B) einen Prozessor (205), einen Speicher (210), eine Ein-/Ausgabevorrichtung (215) und einen Transceiver (220) umfasst und dazu ausgelegt ist, eine zweite Eingabe bezüglich eines zweiten auszugebenden Getränks über die Ein-/Ausgabevorrichtung (215) der zweiten Rechenvorrichtung (200B) zu empfangen, Getränke aus dem Getränkespender (105) basierend auf der zweiten Eingabe auszugeben und Leistungsdaten bezüglich des Betriebs des Servierwagens für Fluggesellschaften (10) an ein oder das Flugzeugrechensystem (305) des Flugzeugs (300) zu übermitteln.

5. Servierwagen für Fluggesellschaften (10) nach dem vorhergehenden Anspruch, wobei die erste Rechenvorrichtung (200A) mit einem oder dem Flugzeugrechensystem (305) über eine Drahtlosverbindung kommuniziert.

6. Servierwagen für Fluggesellschaften (10) nach Anspruch 2, wobei die Leistungsdaten bezüglich des Betriebs des Servierwagens für Fluggesellschaften (10) Datenanalysen bezüglich der aus dem Getränkeausgabesystem (100) ausgegebenen Getränke beinhalten.

7. Servierwagen für Fluggesellschaften (10) nach Anspruch 6, wobei die Leistungsdaten bezüglich des Betriebs des Servierwagens für Fluggesellschaften (10) Informationen über Instandhaltung und Wartung des Servierwagens für Fluggesellschaften (10) beinhalten.

8. Servierwagen für Fluggesellschaften (10) nach einem der vorhergehenden Ansprüche, wobei das Getränkeausgabesystem (100) einen Wasserbehälter (110), einen Kohlensäurebehälter (115), einen Süßstoffbehälter (120, 125), eine Vielzahl von kompakten Aromakartuschen (130), einen Mischer (135) und eine Pumpe (140) umfasst.

9. Servierwagen für Fluggesellschaften (10) nach Anspruch 8, wobei jede der kompakten Aromakartuschen (130) einen Hochfrequenzkennzeichnungs-Chip aufweist, um Vorräte zu erfassen und zu erkennen, wann eine Nachlieferung erfolgen muss.

10. Servierwagen für Fluggesellschaften (10) nach einem der Ansprüche 4 - 9, wobei die erste und die zweite Rechenvorrichtung (200A, 200B) identisch sind.

11. Servierwagen für Fluggesellschaften (10) nach einem der vorhergehenden Ansprüche, wobei das oder ein Flugzeugrechensystem (305) des Flugzeugs (300) fähig ist, mit einem Bodenpersonalsystem zu kommunizieren.

12. Servierwagen für Fluggesellschaften (10) nach einem der vorhergehenden Ansprüche, wobei das Getränkeausgabesystem (100) einen wiederaufladbaren Akku (145) zum Aufladen der ersten Rechenvorrichtung (200A) enthält.

13. Servierwagen für Fluggesellschaften (10) nach einem der vorhergehenden Ansprüche, wobei die erste Rechenvorrichtung (200A) über einen Pfosten (250), der an einer oberen Wand (40) des Wagens (15) befestigt ist, und eine Halterung oder Schale (255), die am Pfosten (250) befestigt ist und die erste Rechenvorrichtung (200A) aufnimmt, abnehmbar an dem Wagen (15) angebracht ist.

14. Servierwagen für Fluggesellschaften (10) nach Anspruch 13, wobei die erste Rechenvorrichtung (200A) dazu ausgelegt ist, nach dem Abnehmen von dem Wagen (15) an der Trennwand des Flugzeugs (300) angebracht zu werden.

15. Servierwagen für Fluggesellschaften (10) nach einem der vorhergehenden Ansprüche, wobei die erste Rechenvorrichtung (200A) Datenanalysen bezüglich der angeforderten und ausgegebenen Getränke sammelt und die Füllstände der Getränkekomponenten im Getränkeausgabesystem (100) des Servierwagens für Fluggesellschaften (10) überwacht.

## Revendications

1. Chariot de restauration aérienne (10), comprenant :
un corps de chariot mobile (15) ;
un système de distribution de boissons (100) placé à l'intérieur du corps de chariot (15) et comportant un distributeur de boissons (105) s'étendant à partir du corps de chariot (15) ; et
un premier dispositif informatique (200A) monté sur le corps de chariot (15) et connecté fonctionnellement au système de distribution de boissons (100), le premier dispositif informatique (200A) comportant un processeur (205), une mémoire (210), un dispositif d'entrée/sortie (215), et un émetteur-récepteur (220) ;
le premier dispositif informatique (200A) étant configuré pour recevoir une première entrée concernant une première boisson à distribuer via le dispositif d'entrée/sortie (215), et distribuer des boissons à partir du distributeur de boissons (105) en fonction de la première entrée ; et
le premier dispositif informatique (200A) étant monté amovible sur le corps de chariot (15) et étant susceptible d'être monté sur un aéronef (300) une fois enlevé du corps de chariot (15).

2. Chariot de restauration aérienne (10) selon la revendication 1, le premier dispositif informatique (220A) communiquant en outre des données d'exploitation concernant le fonctionnement du chariot de restauration aérienne (10) à un système informatique d'aéronef (305) de l'aéronef (300).

3. Chariot de restauration aérienne (10) selon la revendication 1 ou la revendication 2, le dispositif d'entrée/sortie (215) étant un écran tactile.

4. Chariot de restauration aérienne (10) selon l'une quelconque des revendications précédentes, comprenant un deuxième dispositif informatique (200B) monté sur le corps de chariot (15) et connecté fonctionnellement au système de distribution de boissons (100), le deuxième dispositif informatique (200B) comportant un processeur (205), une mémoire (210), un dispositif d'entrée/sortie (215), et un émetteur-récepteur (220), et configuré pour recevoir une deuxième entrée concernant une deuxième boisson à distribuer via le dispositif d'entrée/sortie (215) du deuxième dispositif informatique (200B), distribuer des boissons à partir du distributeur de boissons (105) en fonction de la deuxième entrée, et communiquer des données d'exploitation concernant le fonctionnement du chariot de restauration aérienne (10) à un ou au système informatique d'aéronef (305) de l'aéronef (300).

5. Chariot de restauration aérienne (10) selon la revendication précédente, le premier dispositif informatique (200A) communiquant avec un ou le système informatique d'aéronef (305) via une connexion sans fil.

6. Chariot de restauration aérienne (10) selon la revendication 2, les données d'exploitation concernant le fonctionnement du chariot de restauration aérienne (10) comportant des analyses de données concernant des boissons distribuées à partir du système de distribution de boissons (100).

7. Chariot de restauration aérienne (10) selon la revendication 6, les données d'exploitation concernant le fonctionnement du chariot de restauration aérienne (10) comportant des informations concernant l'exploitation et la maintenance du chariot de restauration aérienne (10).

8. Chariot de restauration aérienne (10) selon l'une quelconque des revendications précédentes, le système de distribution de boissons (100) comprenant un réservoir d'eau (110), un réservoir de dioxyde de carbone (115), un réservoir d'édulcorant (120, 125), une pluralité de cartouches d'arômes compactes (130), un mélangeur (135), et une pompe (140).

9. Chariot de restauration aérienne (10) selon la revendication 8, chacune des cartouches d'arômes compactes (130) étant pourvue d'une puce d'identification radiofréquence pour détecter les réserves et pour identifier un besoin de réapprovisionnement.

10. Chariot de restauration aérienne (10) selon l'une quelconque des revendications 4 à 9, les premier et deuxième dispositifs informatiques (200A, 200B) étant identiques.

11. Chariot de restauration aérienne (10) selon l'une quelconque des revendications précédentes, le ou un système informatique d'aéronef (305) de l'aéronef (300) étant apte à communiquer avec un système de personnel au sol.

12. Chariot de restauration aérienne (10) selon l'une quelconque des revendications précédentes, le système de distribution de boissons (100) comportant une batterie rechargeable (145) pour charger le premier dispositif informatique (200A).

13. Chariot de restauration aérienne (10) selon l'une quelconque des revendications précédentes, le premier dispositif informatique (200A) étant monté amovible sur le corps de chariot (15) via un montant (250) assujetti à une paroi de dessus (40) du corps de chariot (15) et un support ou socle (255) monté sur le montant (250) et retenant le premier dispositif informatique (200A).

14. Chariot de restauration aérienne (10) selon la revendication 13, le premier dispositif informatique (200A) étant configuré pour être monté sur la cloison de l'aéronef (300) une fois enlevé du corps de chariot (15).

15. Chariot de restauration aérienne (10) selon l'une quelconque des revendications précédentes, le premier dispositif informatique (200A) collectant des analyses de données concernant les boissons demandées et distribuées et surveillant les niveaux des ingrédients de boissons dans le système de distribution de boissons (100) du chariot de restauration aérienne (10).
